# EUROPEAN PATENT APPLICATION

(11) **EP 4 475 030 A1**
(43) Date of publication of application: **11.12.2024**
(21) Application number: 23178064.4
(22) Date of filing: 07.06.2023
(51) Int. Cl.: G06F 30/20, G05B 17/02

(54) **METHOD AND SYSTEM FOR CO-SIMULATION USING FUNCTIONAL MOCKUP INTERFACE FOR MODEL EXCHANGE**

(71) Applicant: Siemens Industry Software NV, 3001 Leuven (BE)
(72) Inventor: Sifflet, Romuald, 69300 Caluire et Cuire (FR); Viel, Antoine, 42300 ROANNE (FR)
(74) Representative: Siemens Patent Attorneys

(57) **Abstract**

The invention relates to a computer-implemented method for the simulation of a process by means of co-simulation by coupling more than one simulation model (SMD) processing a subsystem as a component of said simulation, the method comprising:
- controlling the co-simulation step size (STS) of the simulation models by a co-simulation master (CSM),
- enhanced simulation models (ESM) comprising a Functional Mock-up Unit for model exchange (FMU-ME) based on Functional Mock-up Interface standard (FMI).

To provide more flexibility for implementation co-simulation the method comprises the steps of:
- communicating said co-simulation step size (STS) of the enhanced simulation models (ESM) via an Inter Process Communication interface (IPC),
- the co-simulation master (CSM) controlling the co-simulation step size (STS) via said inter process communication interface (IPC) addressing the Functional Mock-up Unit for model exchange (FMU-ME) using DoStep-semantic instructions (DSI),
- the Functional Mock-up Unit for model exchange (FMU-ME) triggering event handling calls (HCL) of the enhanced simulation model (ESM) by notifying events (EVT) to the enhanced simulation model (ESM) initiated by the DoStep-semantic instructions (DSI) received from said Inter Process Communication interface (IPC) such that the co-simulation master (CSM) controls or synchronizes the enhanced simulation model (ESM) executions by using model exchange events (EVT).

## Description

### FIELD OF THE INVENTION

The invention relates to a computer-implemented method for the simulation of a process by means of co-simulation by coupling more than one simulation model processing a sub-system as a component of said simulation, the method comprising:
- some simulation models using the outputs of the other simulation models as inputs,
- controlling the co-simulation step size of the simulation models by a co-simulation master,
- enhanced simulation models which are simulation models comprising a Functional Mock-up Unit for model ex-change based on Functional Mock-up Interface standard.

Furthermore, the invention refers to a computer-system being prepared for carrying out the method.

As industrial products are growing in complexity their design involves the analysis of more and more complex problems and large-scale multi-domain simulations.

In the context of this invention, simulation tools are software programs used to model and simulate the behavior of a system or process. Simulation tools typically provide a graphical user interface that allows the user to define the parameters of the simulation, create a model of the system, and specify the inputs and outputs of the simulation.

The physics of each domain often requires different simulation parameters, time step and solver settings. Even though multi-domain simulation tools can bring a solution, industrial challenges are often tackled with the use of co-simulation environments, handling heterogenous models and data developed in various simulation tools and targeting their suitable solvers. Cosimulation, also known as co-simulation, is a technique used in computer simulation where multiple simulation models are run concurrently and interact with each other. This allows for a more comprehensive and accurate simulation of complex systems that involve multiple interacting components. In cosimulation, each model is typically executed on a separate software platform, which can be a different programming language or simulation tool. The models are connected through interfaces that enable the exchange of data and control signals between them. This way, each model can use the outputs of the other models as inputs, and the simulation can proceed in a coordinated way. Cosimulation is used in a variety of fields, including engineering, physics, and computer science, to simulate and analyze complex systems such as power grids, automotive systems, and chemical processes. It allows for a more accurate and realistic simulation of the behavior of the system under different conditions, as it considers the interactions between the different components. The co-simulation environment is created by coupling two or more simulation processes, each simulating a model with its own solver.

The simulation models used in co-simulation could originate from either homogenous or heterogenous simulators (multi-vendor environment or multi simulation type environment, for example 3D/1D simulation). While co-simulation has been used for decades, proprietary implementations coupling several instances of the same simulation environment helped formalizing the methodology but coupling heterogenous environments in particular from multiple simulation tool vendors has been a challenge. Co-simulation with heterogeneous simulation tools may imply the implementation of special purpose interface blocks for each simulation environment, or the availability of dedicated working mode and interfaces, either standard or proprietary, in the simulation environment.

This additional effort is tedious, consumes much working time, reduces the calculation speed, may reduce the accuracy and is prone to errors. Further, these customized interfaces complicate teamwork or at least require diligent documentation.

In this context the so-called FMI (Functional Mock-up Interface) standard is a set of rules and conventions for defining and using FMUs (Functional Mock-up Units) in the context of model exchange and co-simulation. An FMU is an executable model, placed into an archive file, whose interface complies to FMI standard. The FMI Cooperation develops and promotes the FMI standard which is an open standard for model exchange and co-simulation of dynamic models, which allows models to be shared between different simulation tools. The FMI standard enables to share and execute models between different/in simulation tools. It defines a standard file format for exchanging models (the Functional Mock-up Unit, or FMU), a standard interface for connecting simulation tools (the FMI API), and a standard set of simulation parameters and data exchange formats. The FMI standard is widely adopted in industry and academia and is supported by many simulation tools and software vendors. FMI provides a standardized interface for exchanging models between different simulation tools, allowing models to be reused and integrated into larger systems. FMI defines two types of FMUs: FMU for Model Exchange (FMU-ME) and FMU for Co-Simulation (FMU-CS).

The FMU-ME is used for exchanging models between different simulation environments that support the Model Exchange interface standard, allowing models to be reused and integrated into larger systems. The FMU-CS, on the other hand, is used for co-simulation, where multiple simulation tools can be used together to simulate a complex system. A FMU for co-simulation (FMU-CS) is either an exported simulation process, including its model and solver, or a wrapper code for tool coupling. In this context a wrapper code for tool coupling is a piece of software that enables different simulation tools (one simulation tool might be used to model fluid dynamics, while another might be used to model heat transfer) to work together in a multi-physics simulation by providing an interface for communication and data exchange.

A simulation tool can either import an FMU (use the provided features) or export an FMU (provide the features).

The prior art based on FMI standard consisting in coupling simulation tools is based on the co-simulation interface variant (FMU-CS) and is described in the tool coupling scenario or a derivative described as distributed co-simulation infrastructure.

Generally, co-simulation techniques involve the use of a so-called co-simulation master algorithm (MA) or master tool controlling how time is advanced in the connected slave models. This handling of time differs in the interface variants of the FMI standard. The MA can either be a dedicated standalone algorithm, or the "regular" simulation algorithm of the master tool importing simulation models via a co-simulation interface.

The MA controlling the time advancement, or its remote application service imports an FMU for co-simulation. The secondary tool being coupled is working in a slave mode, which means that it is requested over the interface to use its local solver to integrate the equations of its model over a given time interval with given input data valid at the step start time and giving back output data valid for the step end time ("DoStep" semantic). The secondary tool is providing the FMU-CS to be imported by the master tool.

In the co-simulation community CosiMate is a known tool. CosiMate, from ChiasTek Inc company, is a solution based on custom I/O port blocks library to be added into each model. These ports are handling the communication with router algorithm running in a separate co-simulation control process. Even though CosiMate is claiming the capability to import an FMU-ME model, it does not provide such a model to be imported by a simulation tool to be coupled. Their coupling technique requires the difficult development and costly maintenance of dedicated coupling components for each simulation environment coupled.

It is one object of the invention to provide a standard base method for coupling ordinary simulation tools forming a co-simulation environment with less effort than conventional tools.

### SUMMARY OF THE INVENTION

The object of the invention is achieved by the independent claims. The dependent claims describe advantageous developments and modifications of the invention.

More specifically the invention proposes a method of the incipiently mentioned type comprising the additional steps of:
- communicating said co-simulation step size of the enhanced simulation models from said co-simulation master to the respective enhanced simulation model via an Inter Process Communication interface via the enhanced simulation models' Functional Mock-up Units for model exchange,
- the co-simulation master controlling the co-simulation step size via said inter process communication interface addressing the Functional Mock-up Unit for model exchange using DoStep-semantic instructions,
- the Functional Mock-up Unit for model exchange triggering event handling calls of the enhanced simulation model by notifying events to the enhanced simulation model initiated by the DoStep-semantic instructions received from said Inter Process Communication interface such that the co-simulation master controls or synchronizes the enhanced simulation model executions by using model exchange events.

Some key aspects of the method are that the master algorithm is driving co-simulation time step advancement by performing DoStep-semantic requests to the Functional Mock-up Unit for model exchange, hence it is controlling the co-simulation step size. Furthermore, the Functional Mock-up Unit for model exchange is implementing this semantic, by synchronizing model exchange function executions called by the simulation environment, using model exchange events as well as the implementation of Set/Get functions. The master algorithm is thus indirectly controlling the simulation environment(s) as there is no DoStep-semantic function calls directly on the model exchange interface.

A preferred embodiment provides that the co-simulation master controlling the co-simulation step size via said inter process communication interface addressing the Functional Mock-up Unit for model exchange using DoStep-semantic instructions, such that the Functional Mock-up Unit for model exchange triggering event handling calls of the enhanced simulation model by notifying events to the enhanced simulation model is initiated by the DoStep-semantic instructions received from said Inter Process Communication interface.

In the context of the invention the DoStep-semantic is a method used to advance the simulation time of a model by a time step, being a fraction of the global simulation time range. It is a standardized way of defining how a simulation model should update its internal state, based on the inputs it receives and the time elapsed. In cosimulation the DoStep-semantic may be used to ensure that all the models in the simulation proceed in a coordinated and synchronized way. Each model is expected to implement a DoStep method that updates its internal state based on the inputs it receives and the current simulation time and produces outputs that can be used by other models. The DoStep-semantic is part of the Functional Mock-up Interface standard.

The DoStep method typically takes a single argument, which is the time step duration, and returns a status code indicating whether the simulation has completed or needs to continue. The method can also be used to handle errors or exceptions that may occur during the simulation.

In a co-simulation, each FMU (Functional Mock-up Unit) is responsible for advancing its own simulation by a certain time step. The "doStep" function is called by the master algorithm, which coordinates the exchange of data between the different FMUs. The "doStep" function takes here two arguments: the current simulation time and the time step size. The FMU then advances its simulation by the specified time step and retains the new simulation time and the output variables.

Here is an example of how the "doStep" function can be used to advance the simulation in a co-simulation:

```
 double time = 0.0;
 double stepSize = 0.1;
 double endTime = 10.0;
 while (time < endTime) {
    // Call doStep function on each FMU
    for (int i = 0; i < numFMUs; i++) {
        fmi2Status status = fmi2DoStep(fmu[i], time, step-
 Size, fmi2True);
        // Check status and handle errors
    ... }
    // Update time
    time += stepSize; }
```

In this example, the simulation is advanced in time steps of 0.1 until the end time of 10.0 is reached. The "doStep" function is called on each FMU with the current time, the time step size, and the "fmi2True" flag, which indicates that previous steps will not be redone and the FMU can consider previous step results as final ones. The output variables are then exchanged between the FMUs in the master algorithm.

An interface is a set of rules, protocols, and methods that define how different software components or systems can interact with each other. It is a way for two or more systems to communicate and exchange information without having to know the details of each other's internal workings.

An API (Application Programming Interface) is a set of protocols, routines, and tools for building software applications. It provides a way for different software applications to communicate and interact with each other. APIs define a set of rules for how different software components should interact, making it easier for developers to build complex applications by providing pre-built functionality that can be easily integrated into their code. APIs can be used to access data, services, and functionality from different sources, including web applications, databases, and other software systems.

In the context of FMI (Functional Mock-up Interface), an "event" refers to a trigger or a signal that initiates a change in the simulation. Notifying of events can be used to model external stimuli that affect the system being simulated, such as a change in a boundary condition or an input signal. Events can also be used to model internal changes that occur within the system being simulated, such as a state transition or a change in a parameter value. In FMI, events are defined as discrete points in time, and their occurrence causes the simulation to transition from one state to another. Events can be triggered either by the simulation itself or by an external source. They play an important role in enabling complex simulations of dynamic systems, where changes occur over time in response to various inputs and conditions.

There are two types of events that are known: internal and external.
1. Internal event: An internal event is an event that occurs at a specific point in time in the FMU (Functional Mock-up Unit). Internal events are used to model changes in the state of a system, such as a change in a variable value, or a state transition. In FMI (Functional Mock-up Interface) there are time events and step events notified by the FMU to the importing simulation environment in the form of function calls return values. There are also state events notified with the use of event indicators. These event indicators can be defined in the model description file of an FMU (Functional Mock-up Unit) and can be accessed by the simulation through the FMI interface. Event indicators are related to the variation of a continuous expression depending on input values and states over time and are defined in a way allowing the importing simulation environment to precisely locate the time instant of their occurrence.
2. External event: An external event is an event that models external stimuli that affect the system being simulated such as a change in a parameter or an input signal. This type of event is received by the importing simulation environment using proprietary signaling mechanism and triggers the event handling procedure in the simulation environment resulting in dedicated function calls on the FMI.

Both types of events play an important role in enabling complex simulations of dynamic systems. By using events, FMI allows for the modeling of systems that are subject to external stimuli and internal changes over time, leading to more accurate and realistic simulations. They all trigger event handling procedures aiming for synchronizing states, inputs, outputs, and parameters values between the FMU and the importing simulation environment.

According to the invention the control of the time step size is done via Functional Mock-up Unit for model exchange (FMU-ME) using event notifications resulting in an indirect control of the enhanced simulation model's step size. This control of the enhanced simulation model's step size is very efficient.

A preferred embodiment of the invention provides that event handling calls of the enhanced simulation model comprise at least one of:
- Set function call (SFC),
- Get function call (GFC).

The event handling according to the invention consists in exchanging data of various types (real, integer, string or Boolean...). By notifying the events to the enhanced simulation model Set- & Get-functions of the enhanced simulation model are called to exchange input-data and output-data of the enhanced simulation model for the simulated time of the notified event.

Furthermore, in accordance with the invention there is provided a computer-system being prepared for carrying out the method.

More specific the invention relates to a computer-system, comprising:
- at least one processor,
- at least one memory coupled to the at least one processor, the memory storing a set of instructions to be executed by the processor, wherein said set of instructions, when executed by the processor, cause the system to perform the steps according to the invention. The computer system can be a single computer or a computer system consisting of multiple computers that are connected to each other, such as through the World Wide Web or another network configuration. Preferably, the simulation can be distributed across the computer system in such a way that the computational work is divided among several computers, processors.

### BRIEF DESCRIPTION OF THE DRAWINGS

Embodiments of the invention are now described, by way of example only, with reference to the accompanying drawings, of which:
- Figure 1: shows a block diagram of a conventional interfacing mechanism; and
- Figure 2: shows an alternative block diagram of a conventional interfacing mechanism; and
- Figure 3: shows a block diagram of an interfacing mechanism of a multi-domain modelling and simulation environment according to the invention.

The illustration in the drawings is in schematic form. It is noted that in different figures, similar or identical elements may be provided with the same reference signs.

### DESCRIPTION OF THE DRAWINGS

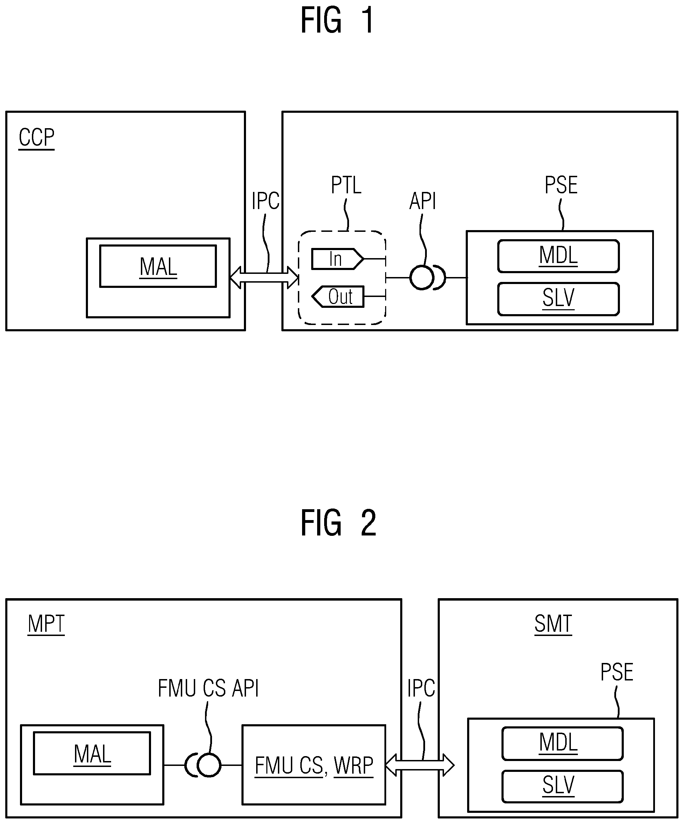

Figure 1 shows a conventional interfacing mechanism. A co-simulation control process CCP controls several simulation tool processes STP, wherein only one exemplary simulation tool processes STP is depicted in Figure 1. An inter process communication IPC interface connects a master algorithm MAL of said co-simulation control process CCP with a port library PTL. The port library PTL is part of the exemplary simulation tool process STP translating incoming IN and outgoing OUT messages respectively to enable communication between said co-simulation control process CCP and a proprietary simulation environment PSE of the respective simulation tool process STP. This type of architecture requires the implementation of the I/O port library for each type of simulation environment.

Said simulation tool process STP communicates with a master algorithm MAL of said co-simulation control process CCP via the port library PTL. Said proprietary simulation environment PSE includes a model MDL relating to the physics to be modelled and a solver SLV. An application programming interface API of said proprietary simulation environment PSE communicates via the port library PTL and the inter process communication (IPC) interface with the master algorithm MAL in particular for coordination with other simulation tools SMT, e.g. receiving information about time advancement or step synchronization of the respective submodule simulation.

Figure 2 shows an alternative conventional interfacing mechanism. Here, the master algorithm MAL is part of a master process tool MPT. The master process tool MPT includes a functional mock-up unit FMU for co-simulation (FMU-CS). Said functional mock-up unit for co-simulation FMU-CS may be an exported model or a wrapper WRP code for tool coupling - being respectively provided by a simulation tool SMT communicating via an API of the functional mock-up unit for co-simulation FMU-CS-API with the master process tool MPT. The connected simulation tool SMT is working in a slave mode, which means that it is requested over the interface to use its local solver SLV to integrate the equations of its model MDL over a given time interval with given input data valid at the step start time and giving back output data valid for the step end time ("DoStep" semantic).

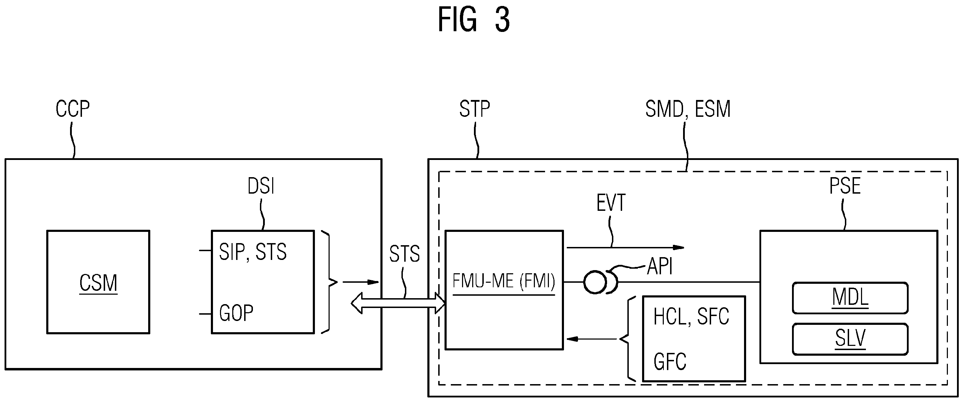

Figure 3 illustrates a block diagram of an interfacing mechanism of a multi-domain modelling and simulation environment according to the invention.

A co-simulation control process CCP controls several simulation tool processes STP. Only one exemplary simulation tool process STP is depicted in Figure 3. An interface, which may be a inter process communication IPC interface, connects a co-simulation master CSM of said co-simulation control process CCP with said simulation tool process STP. The interface may be a general interface for data exchange between computing processes. Said simulation tool process STP comprises a simulation model SMD.

The co-simulation master CSM controls the co-simulation step size STS of said at least one simulation model SMD. The depicted simulation model SMD is an enhanced simulation model ESM which is a simulation model SMD comprising - next to the proprietary simulation environment PSE of the respective simulation tool process STP - a Functional Mock-up Unit for model exchange FMU-ME. This Functional Mock-up Unit for model exchange FMU-ME is based on the Functional Mock-up Interface standard (FMI).

The co-simulation master CSM communicates said co-simulation step size STS of the enhanced simulation models ESM via an Inter Process Communication interface IPC via the enhanced simulation models' SMD Functional Mock-up Units for model exchange FMU-ME.

The co-simulation master CSM controls said co-simulation step size STS via said inter process communication interface IPC addressing the Functional Mock-up Unit for model exchange FMU-ME using DoStep-semantic instructions DSI.

The Functional Mock-up Unit for model exchange FMU-ME triggers event handling calls HCL of the enhanced simulation model ESM by notifying events EVT to the enhanced simulation model ESM initiated by the DoStep-semantic instructions DSI received from said Inter Process Communication interface IPC such that the co-simulation master CSM controls or synchronizes the enhanced simulation model ESM executions by using model ex-change events EVT. The event handling calls HCL of the enhanced simulation model ESM comprise Set-function-calls SFC and Get-function-calls GFC.

The co-simulation master CSM controlling the co-simulation step size STS via said inter process communication interface IPC addresses the Functional Mock-up Unit for model exchange FMU-ME using DoStep-semantic instructions DSI. These may be instructions to set inputs SIP, to set step size STS or to get outputs GOP.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. A computer-implemented method for the simulation of a process by means of co-simulation by coupling more than one simulation model (SMD) processing a sub-system as a component of said simulation, the method comprising:
- some simulation models (SMD) using the outputs of the other simulation models (SMD) as inputs,
- controlling the co-simulation step size (STS) of the simulation models by a co-simulation master (CSM),
- enhanced simulation models (ESM) which are simulation models (SMD) comprising a Functional Mock-up Unit for model exchange (FMU-ME) based on Functional Mock-up Interface standard (FMI),
**characterized in that** the method comprises:
- communicating said co-simulation step size (STS) of the enhanced simulation models (ESM) from said co-simulation master (CSM) to the respective enhanced simulation model (ESM) via an Inter Process Communication interface (IPC) via the enhanced simulation models' (SMD) Functional Mock-up Units for model exchange (FMU-ME),
- the Functional Mock-up Unit for model exchange (FMU-ME) triggering event handling calls (HCL) of the enhanced simulation model (ESM) by notifying events (EVT) to the enhanced simulation model (ESM) initiated by instructions (DSI) received from said Inter Process Communication interface (IPC) such that the co-simulation master (CSM) controls or synchronizes the enhanced simulation model (ESM) executions by using model exchange events (EVT).

2. Method according to claim 1, wherein the co-simulation master (CSM) controlling the co-simulation step size (STS) via said inter process communication interface (IPC) addressing the Functional Mock-up Unit for model exchange (FMU-ME) using DoStep-semantic instructions (DSI), such that the Functional Mock-up Unit for model exchange (FMU-ME) triggering event handling calls (HCL) of the enhanced simulation model (ESM) by notifying events (EVT) to the enhanced simulation model (ESM) is initiated by the DoStep-semantic instructions (DSI) received from said Inter Process Communication interface (IPC).

3. Method according to claim 1 or 2, wherein said event handling calls of the enhanced simulation model comprise at least one of:
- Set function call (SFC),
- Get function call (GFC).

4. Computer-system (CPS), comprising:
- at least one processor (CPU),
- at least one memory coupled to the at least one processor, the memory storing a set of instructions to be executed by the processor (CPU),
wherein said set of instructions, when executed by the processor (CPU), cause the system to perform the steps according to one of the previous claims 1, 2, 3.
